# EUROPÄISCHE PATENTSCHRIFT

(11) **EP 3 579 226 B1**
(45) Veröffentlichungstag und Bekanntmachung des Hinweises auf die Patenterteilung: **25.09.2024**
(21) Anmeldenummer: 18209926.7
(22) Anmeldetag: 03.12.2018
(51) Int. Cl.: G10K 15/02, B60Q 5/00

(54) **RÜCKFAHRWARNVORRICHTUNG**
REVERSE DRIVE WARNING DEVICE
DISPOSITIF D'AVERTISSEMENT DE CONDUITE EN MARCHE ARRIÈRE

(30) Priorität: 05.06.2018 EP 18175901
(43) Veröffentlichungstag der Anmeldung: 11.12.2019
(73) Patentinhaber: Grewus GmbH, 22335 Hamburg (DE)
(72) Erfinder: Sandomeer, Ralf, 22335 Hamburg (DE)
(74) Vertreter: Straube, Urs Norman

(56) Entgegenhaltungen:
- WO-A1-2009/036330
- WO-A1-2012/066672
- US-A1- 2011 199 199

## Beschreibung

### Gebiet der Erfindung

Die vorliegende Erfindung betrifft eine Rückfahrwarnvorrichtung, also eine Vorrichtung, die Personen vor rückwärts fahrenden Fahrzeugen mit einem Signal warnen soll.

### Hintergrund der Erfindung

Wenn Fahrzeuge, wie zum Beispiel Personenkraftwagen, Lastwagen, Busse, Traktoren, Gabelstapler oder Radlader im Betrieb rückwärts fahren, besteht die Gefahr einer Kollision mit Passanten, wenn sich das Fahrzeug außer Sicht befindet oder wenn die Person dieses nicht im Blickfeld hat. Diese Gefahr kann erheblich vermindert werden, wenn das Fahrzeug mit einer Vorrichtung versehen ist, die Personen warnt, wenn das Fahrzeug zurücksetzt. Bekannte Rückfahrwarnvorrichtungen geben üblicherweise ein optisches oder akustisches Signal ab, das automatisch ausgelöst wird, wenn bei dem Fahrzeug der Rückwärtsgang eingelegt wird. Beispielsweise kann ein Tonsignal abgegeben werden, welches gepulst wird, um eine höhere Aufmerksamkeit zu erreichen. Der Ton hat dabei eine gleichbleibende Frequenz. Nachteilig an einer solchen Vorrichtung ist, dass Warnsignale, die aus einer einzigen Frequenz oder aus nur wenigen Frequenzen bestehen, vom menschlichen Gehör räumlich nur sehr schwer geortet werden können und daher eine geringe Information zum Aufenthaltsort des Fahrzeugs liefern. Daher existieren ebenfalls Rückfahrwarnvorrichtungen, die als akustisches Signal ein breitbandiges weißes Rauschen verwenden. Die genannten Rückfahrwarnvorrichtungen haben jedoch den Nachteil, dass das Signal eine hohe Lautsstärke aufweisen muss, um von Passanten wahrgenommen zu werden und so eine Lärmbelästigung darstellt oder als unangenehm empfunden wird.

Das Dokument US 2011/199199 offenbart eine Rückfahrwarnvorrichtung, wobei der Umgebungsgeräuschpegel im Bereich von 20 Hz bis 20 kHz gemessen wird und der Schalldruckpegel eines über einen Lautsprecher ermittelten akustischen Signals entsprechend der "A-weighting" Kurve und abhängig von der Umgebungsfrequenz ausgegeben wird.

### Zusammenfassung der Erfindung

Die vorliegende Erfindung wurde vor dem Hintergrund des vorstehend beschriebenen Stands der Technik entwickelt. Aufgabe der Erfindung ist es, eine Vorrichtung der genannten Art zur Verfügung zu stellen, durch die eine Lärmbelästigung durch das akustische Signal vermieden wird.

Diese Aufgabe wird durch eine Rückfahrwarnvorrichtung gemäß Anspruch 1 gelöst.

Vorteilhafte Ausgestaltungen der Erfindung sind in den abhängigen Ansprüchen definiert.

Der Analysator ist durch Implementierung eines psychoakustischen Modells ausgebildet, ausgewählte Frequenzbänder der Umgebungsgeräusche zu messen, dasjenige Frequenzband der Umgebungsgeräusche mit der niedrigsten Mithörschwelle zu ermitteln und den Signalgenerator derart einzustellen, dass die Frequenz des akustischen Signals und/oder der Frequenzbereich des akustischen Signals in dem ermittelten Frequenzband mit der niedrigsten Mithörschwelle liegt. Unter der Mithörschwelle ist die Wahrnehmbarkeitsschwelle für das akustische Signal bei gleichzeitiger Anwesenheit der Umgebungsgeräusche zu verstehen. Die Umgebungsgeräusche stören bzw. maskieren je nach deren Frequenzspektrum die Wahrnehmbarkeit des akustischen Signals. Durch die psychoakustische Messung und Auswertung wird für das akustische Signal dann dasjenige Frequenzband ausgewählt, das bei den jeweiligen Umgebungsgeräuschen vom Ohr am besten wahrgenommen wird.

Zur Messung und Auswertung der aufgenommenen Umgebungsgeräusche weist der Analysator mehrere Oktav- oder Terzbandpassfilter auf. Die Oktav- oder Terzfilter sind entweder als Filterbank oder als ein schaltbares, vorzugsweise digitales Oktav- oder Terzfilter für den Zeitmultiplexbetrieb ausgebildet.

Für den Analysator können fünf bis zehn, vorzugsweise acht Terzbandpassfilter vorgesehen sein, um eine präzise Messung zu ermöglichen.

Es kann eine Steuereinheit vorgesehen sein, um das akustische Signal alternierend ein- und auszuschalten, vorzugsweise mit einer Signaldauer von etwa 200 Millisekunden und einer anschließenden Signalunterbrechung von etwa 50 Millisekunden. Pro Sekunde werden etwa drei Pulse wiedergegeben. Hierdurch wird die Aufmerksamkeit von Passanten erhöht und das akustische Signal besser wahrgenommen. Die Steuereinheit kann eine gesonderte elektronische Komponente oder der Prozessor des Signalgenerators sein.

Die Rückfahrwarnvorrichtung bzw. der Analysator kann eingerichtet sein, die Messungen des Schalldruckpegels der aufgenommenen Umgebungsgeräusche während einer akustischen Signalunterbrechung durchzuführen. Hierdurch wird die Messung nicht durch das akustische Signal beeinflusst oder gestört. Diese Steuerung der Messungen kann ebenfalls durch die Steuereinheit oder den Prozessor des Signalgenerators gesteuert werden.

Die Komponenten der Rückfahrwarnvorrichtung können einzelne Bauteile oder in einer Schaltung oder in einem Chip integriert oder ganz oder teilweise in einem programmtechnisch entsprechend eingerichteten Prozessor implementiert sein.

### Kurze Beschreibung der Zeichnungen

Die Figuren zeigen im Einzelnen:
- Figur 1: eine schematische Ansicht der Komponenten der Rückfahrwarnvorrichtung;
- Figur 2a: eine Darstellung einer Terzbandpassfiltermessung des Analysators und der Einstellung des Terzbandpassfilters für das akustische Signal;
- Figur 2b: eine Darstellung einer anderen Terzbandpassfiltermessung des Analysators und der entsprechenden Einstellung des Terzbandpassfilters für das akustische Signal;
- Figur 3: eine schematische Ansicht der Komponenten einer zweiten Ausführungsform der Rückfahrwarnvorrichtung; und
- Figur 4: eine Darstellung des Zeitablaufs von Terzbandpassfiltermessungen und Ausgabe der akustischen Signale.

Funktionsmäßig gleiche Teile sind mit denselben Bezugszeichen versehen.

### Detaillierte Beschreibung einer bevorzugten Ausführungsform

Nachfolgend wird eine beispielhafte Ausführungsform der Erfindung unter Bezugnahme auf die Zeichnungen detailliert beschrieben, wobei den Zeichnungen weitere vorteilhafte Merkmale zu entnehmen sind.

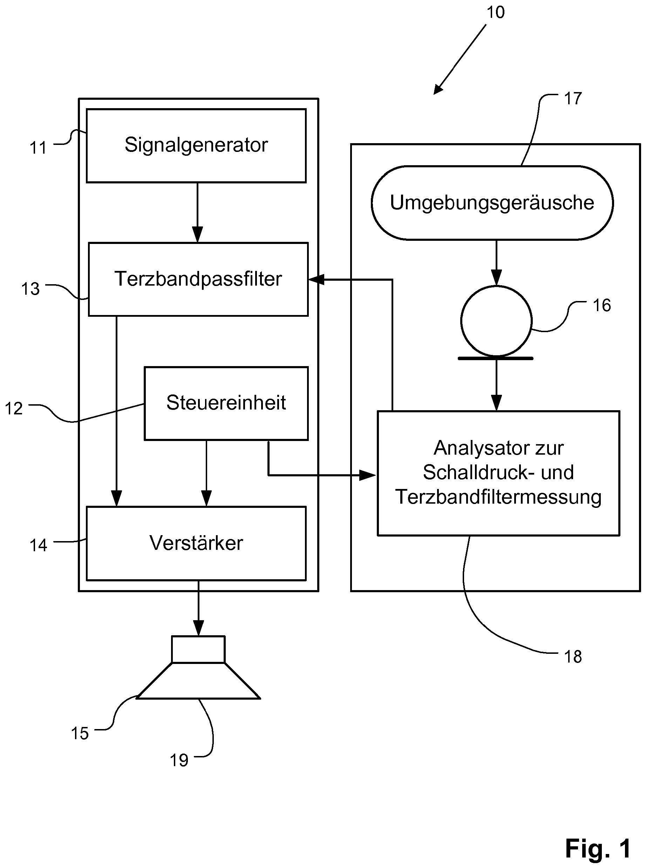

Figur 1 zeigt eine schematische Ansicht der Komponenten der Rückfahrwarnvorrichtung 10. Die gezeigten funktionellen Komponenten können einzelne Bauteile oder in einer Schaltung oder in einem Chip integriert sein.

Für die Rückfahrwarnvorrichtung 10 ist ein Signalgenerator 11 zur Erzeugung eines akustischen Signals 19 mit konstantem Leistungsdichtespektrum in einem hörbaren, schmalbandigen Frequenzbereich vorgesehen. Zu diesem Zweck weist der Signalgenerator 11 ein Signal-Terzbandpassfilter 13 auf, das das erzeugte Signal entsprechend filtert. Das Terzband des Signal-Terzbandpassfilters 13 ist elektronisch einstellbar, so dass acht verschiedene Terzbänder wählbar sind.

Weiterhin ist eine Steuereinheit 12 vorgesehen, die durch Steuerung eines Verstärkers 14 das akustische Signal 19 mit einer Signaldauer von etwa 200 Millisekunden und einer anschließenden Signalunterbrechung von etwa 50 Millisekunden alternierend ein- und ausschaltet. Das akustische Signal 19 wird durch den Verstärker 14 verstärkt und durch einen Lautsprecher 15 ausgegeben. Die Verstärkungsleistung des Verstärkers 14 ist ebenfalls durch die Steuereinheit 12 regelbar und damit der Schalldruckpegel des abgegebenen akustischen Signals 19. Das gepulste, gefilterte und verstärkte schmalbandige Signal bildet das akustische Signal 19 zur Warnung von Passanten.

Die Umgebungsgeräusche 17 werden durch ein Mikrophon 16 aufgenommen, das an einen Analysator 18 mit acht (nicht gezeigten) Mess-Terzbandpassfiltern 20 angeschlossen ist. Die Umgebungsgeräusche 17 werden hinsichtlich ihres Frequenzspektrums analysiert, d.h. es wird nacheinander oder gleichzeitig der Schalldruckpegel für jedes der acht Terzbänder gemessen. Der Analysator 18 ist elektrisch mit dem Signal-Terzbandpassfilter 13 verbunden und kann dessen Frequenzbereich bzw. Terzband einstellen. Die Mess-Terzbandpassfilter 20 des Analysators 18 dienen also zur Messung 22 der Umgebungsgeräusche und das bzw. die Signal-Terzbandpassfilter 13 zur Begrenzung der Bandbreite des akustischen Signals.

Die Steuereinheit 12 ist außerdem mit dem Analysator 18 verbunden und kann diesen steuern, so dass die Messungen 22 des Analysators 18 periodisch jeweils während einer akustischen Signalunterbrechung durchgeführt werden.

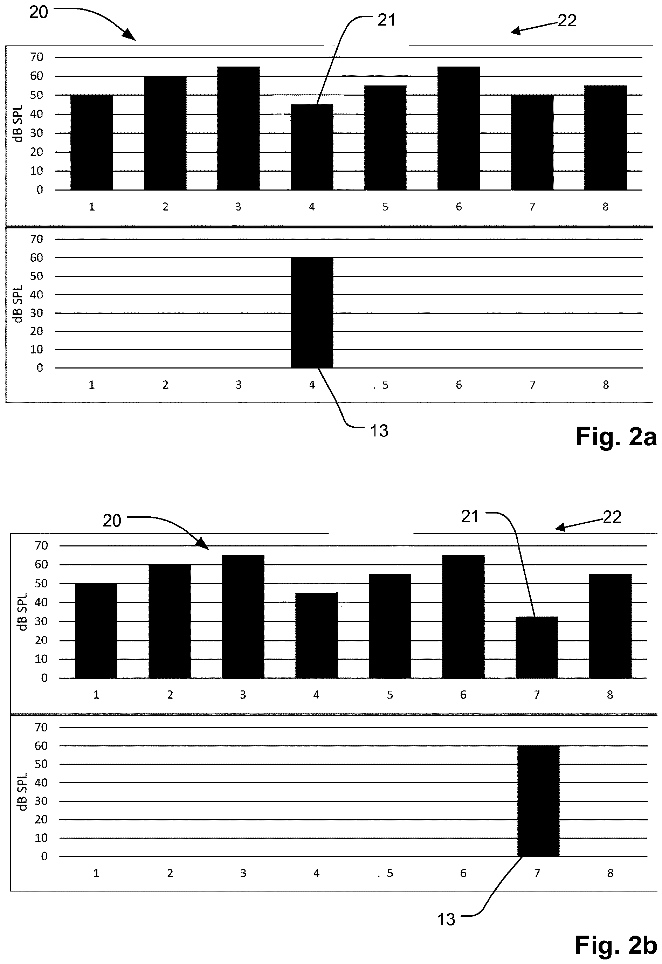

Figur 2a zeigt eine Darstellung einer Terzbandpassfiltermessung 22 des Analysators 18 und der Einstellung des Terzbandpassfilters 13 für das akustische Signal 19. Die acht Mess-Terzbandpassfilter 20 des Analysators 18 können als analoge elektronische Schaltung beispielsweise in Form einer Filterbank vorliegen. Es kann auch ein einziges Filter verwendet werden, welches für die verwendeten Terzbänder 20 zeitlich nacheinander geschaltet wird. Alternativ kann auch ein schaltbares digitales Filter verwendet werden. Die gleichen Möglichkeiten bestehen für das oder die Terzbandpassfilter 13 zur Filterung des akustischen Signals 19.

Das Prinzip der Messung 22 ist durch ein oberes und ein unteres Balkendiagramm verdeutlicht, wobei jeder Balken ein anderes Terzfilterband 20, 13 darstellt. Die Terzfilterbänder 20, 13 sind auf der horizontalen Achse von 1 bis 8 durchnummeriert, wobei das Terzfilterband 1 den niedrigsten und das Terzfilterband 8 den höchsten Frequenzbereich durchlässt. Die vertikale Achse zeigt den gemessenen Schalldruckpegel (SPL) in Dezibel (dB) für jedes Terzfilterband 20.

In der in Figur 2a gezeigten Beispielmessung 22 weist das vierte Terzfilterband 21 den geringsten Schalldruckpegel bzw. die geringste Amplitude auf. Dieses wird vom Analysator 18 automatisch ermittelt und dann das korrespondierende vierte Terzfilterband 13 für die Signalfilterung gewählt, das den gleichen Durchlassbereich und die gleiche Mittenfrequenz wie das vierte Terzfilterband 21 des Analysators 18 hat. Außerdem wird der Schalldruckpegel des akustischen Signals 19 an den gemessenen Schalldruckpegel des vierten Terzfilterbandes 21 derart angepasst, dass die Verstärkung 14 bei einem niedrigen Schalldruckpegel erniedrigt und bei einem hohen Schalldruckpegel erhöht wird.

Dadurch ist das akustische Signal 19 bei den gemessenen Umgebungsgeräuschen 17 besonders gut hörbar und wird dennoch nicht als störend empfunden.

Figur 2b zeigt eine Darstellung einer anderen Terzbandpassfiltermessung 22 des Analysators 18 und der entsprechenden Einstellung des Signal-Terzbandpassfilters 13 für das akustische Signal 19. In der hier gezeigten Beispielmessung 22 weist das siebte Terzfilterband 21 den geringsten Schalldruckpegel bzw. die geringste Amplitude auf. Daher wird dass korrespondierende siebte Terzfilterband 13 für die Signalfilterung gewählt.

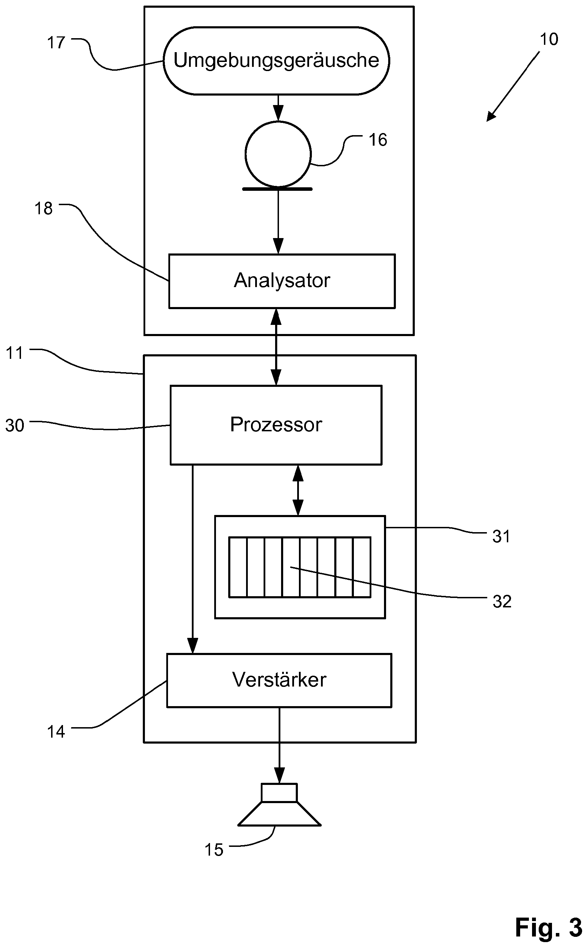

Figur 3 zeigt eine schematische Ansicht der Komponenten einer zweiten Ausführungsform der Rückfahrwarnvorrichtung 10. Die gezeigten funktionellen Komponenten können einzelne Bauteile oder in einer Schaltung oder in einem Chip integriert sein. Sie können auch ganz oder teilweise in einem programmtechnisch entsprechend eingerichteten Prozessor implementiert sein. Wie bei der in Figur 1 gezeigten ersten Ausführungsform werden die Umgebungsgeräusche 17 durch ein Mikrophon 16 aufgenommen, das an einen Analysator 18 mit acht (nicht gezeigten) Mess-Terzbandpassfiltern 20 angeschlossen ist, durch die der Schalldruckpegel für jedes der entsprechenden acht Terzbänder gemessen wird.

Ebenso ist ein Signalgenerator 11 zur Erzeugung von akustischen Signalen 19 mit konstantem Leistungsdichtespektrum in einem hörbaren, schmalbandigen Frequenzbereich vorgesehen. Der Signalgenerator 11 umfasst einen Prozessor 30 zur Verarbeitung von Daten, der mit einem nichtflüchtigen Speicher 31 verbunden ist. Im Speicher 31 sind acht akustische Signale als digitale Samples 32 bzw. Sounddateien abgelegt, wobei die Samples 32 hinsichtlich ihrer klanglichen Eigenschaften und insbesondere ihres Frequenzspektrums den erzeugten akustischen Signalen 19 der ersten Ausführungsform gemäß Figur 1 entsprechen. Der Prozessor kann die Samples 32 aus dem Speicher 31 auslesen und über den mit ihm verbundenen Verstärker 14 durch den Lautsprecher 15 ausgeben.

Der Prozessor 30 ist mit dem Analysator 18 verbunden und eingerichtet, die Mess-Terzbandpassfilter 20 des Analysators 18 einzustellen und die Werte der Messungen 22 zu empfangen und zu verarbeiten. Er kann außerdem den Analysator 18 steuern, so dass die Messungen 22 des Analysators 18 periodisch jeweils während einer akustischen Signalunterbrechung durchgeführt werden. Die Verstärkungsleistung des Verstärkers 14 ist ebenfalls durch den Prozessor 30 regelbar und somit der Schalldruckpegel des abgegebenen akustischen Signals 19.

Der Prozessor 30 kann digitale Terzbandpassfilter 20 aufweisen und programmtechnisch eingerichtet sein, die beschriebenen Funktionen des Analysators 18 auszuführen.

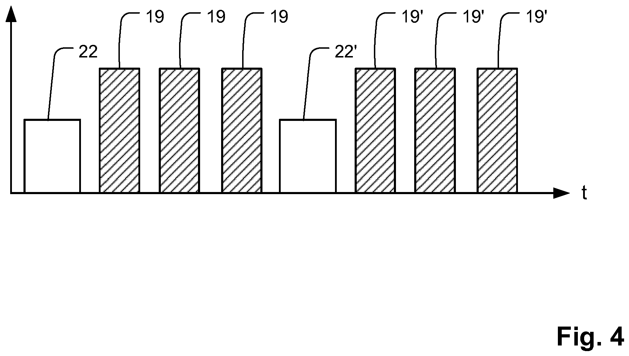

Figur 4 zeigt eine graphische Darstellung des Zeitablaufs der Terzbandpassfiltermessungen 22, 22' und der Ausgabe der akustischen Signale 19, 19' für die beiden beschrieben Ausführungsformen der Rückfahrwarnvorrichtung 10.

Die Abszisse ist mit "t" bezeichnet und zeigt die Zeitachse. Der Signalgenerator 11 und der Analysator 18 werden durch die Steuereinheit 12 oder den Prozessor 30 koordiniert angesteuert. Beim Einschalten der Rückfahrwarnvorrichtung 10 wird zunächst der Analysator 18 aktiviert, der wie oben beschrieben acht Terzbandpassfilter-Messungen 22 der Umgebungsgeräusche 17 durchführt. Auf Basis der Messung 22 wird der Schalldruckpegel und Frequenzbereich des akustischen Signals 19 ausgewählt und dieses gepulst dreimal über den Lautsprecher 15 ausgegeben.

Danach führt der Analysator 18 eine erneute Messung 22' durch, das akustische Signals 19 wird dementsprechend ausgewählt wieder dreimal über den Lautsprecher 15 ausgegeben. Der Vorgang wird solange wiederholt, bis die Rückfahrwarnvorrichtung 10 ausgeschaltet wird.

### Bezugszeichenliste

- 10.: Rückfahrwarnvorrichtung
- 11.: Signalgenerator
- 12.: Steuereinheit
- 13.: Signal-Terzbandpassfilter
- 14.: Verstärker
- 15.: Lautsprecher
- 16.: Mikrophon
- 17.: Umgebungsgeräusche
- 18.: Analysator
- 19.: Akustisches Signal
- 20.: Analysator-Terzbandpassfilter
- 21.: Terzband mit niedrigstem Schalldruckpegel
- 22.: Terzbandpassfilter-Messung
- 30.: Prozessor
- 31.: Speicher
- 32.: Sounddaten

## Patentansprüche

1. Rückfahrwarnvorrichtung (10) für ein rückwärts fahrendes Fahrzeug, umfassend:
a) einen Signalgenerator (11) zur Erzeugung eines akustischen Signals (19),
b) einen Verstärker (14) zur Ausgabe des akustischen Signals (19) über einen Lautsprecher (15),
c) ein Mikrophon (16) zur Aufnahme von Umgebungsgeräuschen (17),
d) einen Analysator (18) zur Messung (22) des Schalldruckpegels der aufgenommenen Umgebungsgeräusche (17), wobei der Analysator (18) ausgebildet ist, den Schalldruckpegel des akustischen Signals (19) einzustellen und an den Schalldruckpegel der Umgebungsgeräusche (17) anzupassen, wobei
e) die Frequenz und/oder der Frequenzbereich des Signalgenerators (11) einstellbar ist, **dadurch gekennzeichnet, dass**
f) der Analysator (18) **durch Implementierung eines psychoakustischen Modells** ausgebildet ist, ausgewählte Frequenzbänder (20) der Umgebungsgeräusche zu messen und dasjenige Frequenzband (21) zu ermitteln, in welchem die niedrigste Mithörschwelle liegt, sowie
g) den Signalgenerator (11) derart einzustellen, dass die Frequenz des akustischen Signals (19) und/oder der Frequenzbereich des akustischen Signals (19) in dem ermittelten Frequenzband (21) liegt, in dem die niedrigste Mithörschwelle liegt, wobei
h) der Analysator (18) mehrere Oktav- oder Terzbandpassfilter (20) zur Messung (22) und Auswertung der aufgenommenen Umgebungsgeräusche aufweist, die als Filterbank oder als ein schaltbares, vorzugsweise digitales Oktav- oder Terzfilter für den Zeitmultiplexbetrieb ausgebildet sind.

2. Rückfahrwarnvorrichtung (10) nach einem der vorhergehenden Ansprüche, **dadurch gekennzeichnet, dass** für den Analysator (18) fünf bis zehn, vorzugsweise acht Mess-Terzbandpassfilter (20) vorgesehen sind.

3. Rückfahrwarnvorrichtung (10) nach einem der vorhergehenden Ansprüche, **dadurch gekennzeichnet, dass** der Signalgenerator (11) einen Prozessor aufweist und eingerichtet ist, das akustische Signal (19) digital zu erzeugen und/oder gespeicherte akustische Klangdaten (32) auszugeben.

4. Rückfahrwarnvorrichtung (10) nach einem der vorhergehenden Ansprüche, **dadurch gekennzeichnet, dass** der Signalgenerator (11) ausgebildet ist, ein Signal (19) mit konstantem Leistungsdichtespektrum oder im Wesentlichen konstantem Leistungsdichtespektrum in einem schmalbandigen Bereich zu erzeugen, wobei er mindestens ein Signal-Bandpassfilter (13), insbesondere ein Oktav- oder Terzbandpassfilter, aufweist, dessen Durchlassbereich und/oder Mittenfrequenz einstellbar ist.

5. Rückfahrwarnvorrichtung (10) nach einem der vorhergehenden Ansprüche, **dadurch gekennzeichnet, dass** eine Steuereinheit (12) vorgesehen ist, um das akustische Signal (19) alternierend ein- und auszuschalten, vorzugsweise mit einer Signaldauer von etwa 200 Millisekunden und einer anschließenden Signalunterbrechung von etwa 50 Millisekunden.

6. Rückfahrwarnvorrichtung (10) nach einem der vorhergehenden Ansprüche, **dadurch gekennzeichnet, dass** sie bzw. der Analysator (18) eingerichtet ist, die Messungen (22) des Schalldruckpegels der aufgenommenen Umgebungsgeräusche (17) während einer akustischen Signalunterbrechung durchzuführen.

7. Rückfahrwarnvorrichtung (10) nach einem der vorhergehenden Ansprüche, **dadurch gekennzeichnet, dass** deren Komponenten einzelne Bauteile oder in einer Schaltung oder in einem Chip integriert sind oder ganz oder teilweise in einem programmtechnisch entsprechend eingerichteten Prozessor implementiert sind.

## Claims

1. A reverse drive warning device (10) for a vehicle driving in reverse, comprising:
a) a signal generator (11) for generating an acoustic signal (19),
b) an amplifier (14) for outputting the acoustic signal (19) via a loudspeaker (15),
c) a microphone (16) for recording ambient noises (17),
d) an analyser (18) for measuring (22) the sound pressure level of the recorded ambient noises (17), wherein the analyser (18) is designed to adjust the sound pressure level of the acoustic signal (19) and to adapt it to the sound pressure level of the ambient noise (17), wherein
e) the frequency and/or the frequency range of the signal generator (11) is adjustable,
**characterised in that**
f) the analyser (18) is designed, by implementing a psychoacoustic model, to measure selected frequency bands (20) of the ambient noise and to determine the frequency band (21) in which the lowest masked threshold lies, and
g) to adjust the signal generator (11) such that the frequency of the acoustic signal (19) and/or the frequency range of the acoustic signal (19) lies in the determined frequency band (21) in which the lowest masked threshold lies, wherein
h) the analyser (18) has several octave or one-third octave bandpass filters (20) for measuring (22) and evaluating the recorded ambient noise, which are designed as a filter bank or as a switchable, preferably digital octave or one-third octave filter for time-division multiplex operation.

2. The reverse drive warning device (10) according to any one of the preceding claims, **characterised in that** five to ten, preferably eight, third-octave measuring bandpass filters (20) are provided for the analyser (18).

3. The reverse drive warning device (10) according to any one of the preceding claims, **characterised in that** the signal generator (11) has a processor and is configured to generate the acoustic signal (19) digitally and/or to output stored acoustic sound data (32).

4. The reverse drive warning device (10) according to any one of the preceding claims, **characterised in that** the signal generator (11) is designed to generate a signal (19) with a constant power density spectrum or essentially constant power density spectrum in a narrow-band range, wherein it has at least one signal bandpass filter (13), in particular an octave or one-third octave bandpass filter, the passband and/or centre frequency of which is adjustable.

5. The reverse drive warning device (10) according to any one of the preceding claims, **characterised in that** a control unit (12) is provided in order to switch the acoustic signal (19) on and off alternately, preferably with a signal duration of approximately 200 milliseconds and a subsequent signal interruption of approximately 50 milliseconds.

6. The reverse drive warning device (10) according to any one of the preceding claims, **characterised in that** it or the analyser (18) is configured to perform the measurements (22) of the sound pressure level of the recorded ambient noise (17) during an acoustic signal interruption.

7. The reverse drive warning device (10) according to any one of the preceding claims, **characterised in that** its components are individual piece parts or are integrated in a circuit or in a chip or are implemented in whole or partially in a processor configured accordingly in terms of programming.

## Revendications

1. Dispositif d'avertissement de recul (10) pour un véhicule circulant en marche arrière, comprenant :
a) un générateur (11) de signal destiné à la production d'un signal acoustique (19),
b) un amplificateur (14) destiné à l'émission du signal acoustique (19) par un haut-parleur (15),
c) un microphone (16) destiné à l'enregistrement de bruits ambiants (17),
d) un analyseur (18) destiné à la mesure (22) du niveau de pression acoustique des bruits ambiants (17) enregistrés, l'analyseur étant configuré pour régler le niveau de pression acoustique du signal acoustique (19) et l'adapter au niveau de pression acoustique des bruits ambiants (17),
dans lequel
e) la fréquence et/ou la gamme de fréquences du générateur (11) de signal est/sont réglable(s),
**caractérisé en ce que**
f) l'analyseur (18) est configuré pour mesurer, par implémentation d'un modèle psycho-acoustique, des bandes de fréquences (20) sélectionnées des bruits ambiants (17) et déterminer la bande de fréquences (21) dans laquelle se situe le seuil d'audibilité simultanée le plus bas, ainsi que
g) pour régler le générateur (11) de signal de manière que la fréquence du signal acoustique (19) et/ou la gamme de fréquences du signal acoustique (19) se situe(nt) dans la bande de fréquences (21) déterminée, dans laquelle se situe le seuil d'audibilité simultanée le plus bas, dans lequel
h) l'analyseur (18) comporte plusieurs filtres passe-bande (20) d'octave ou de tiers d'octave destinés à la mesure (22) et à l'évaluation des bruits ambiants enregistrés, qui sont configurés sous forme de banc de filtres ou sous forme d'un filtre d'octave ou de tiers d'octave commutable, de préférence numérique, pour le fonctionnement en multiplexage temporel.

2. Dispositif d'avertissement de recul (10) selon l'une quelconque des revendications précédentes, **caractérisé en ce que** cinq à dix, de préférence huit filtres passe-bande (20) de tiers d'octave de mesure sont prévus pour l'analyseur (18) .

3. Dispositif d'avertissement de recul (10) selon l'une quelconque des revendications précédentes, **caractérisé en ce que** le générateur (11) de signal comporte un processeur et est conçu pour produire numériquement le signal acoustique (19) et/ou émettre des données sonores acoustiques (32) mémorisées.

4. Dispositif d'avertissement de recul (10) selon l'une quelconque des revendications précédentes, **caractérisé en ce que** le générateur (11) de signal est configuré pour produire dans une plage à bande étroite un signal (19) à spectre de densité de puissance constant ou spectre de densité de puissance sensiblement constant, en comportant au moins un filtre passe-bande (13) de signal, en particulier un filtre passe-bande d'octave ou de tiers d'octave dont la gamme de bandes passantes et/ou la fréquence médiane est/sont réglable(s).

5. Dispositif d'avertissement de recul (10) selon l'une quelconque des revendications précédentes, **caractérisé en ce qu'**une unité de commande (12) est prévue pour alternativement déclencher et arrêter le signal acoustique (19), de préférence avec une durée de signal d'environ 200 millisecondes et une interruption subséquente de signal d'environ 50 millisecondes.

6. Dispositif d'avertissement de recul (10) selon l'une quelconque des revendications précédentes, **caractérisé en ce qu'**il ou l'analyseur (18) est conçu pour effectuer pendant une interruption de signal acoustique les mesures (22) du niveau de pression acoustique des bruits ambiants (17) enregistrés.

7. Dispositif d'avertissement de recul (10) selon l'une quelconque des revendications précédentes, **caractérisé en ce que** les composants de ce dernier sont des éléments constitutifs individuels ou sont intégrés dans un circuit ou dans une puce ou sont partiellement ou totalement implémentés dans un processeur conçu en conséquence quant au programme.
